# EUROPÄISCHE PATENTSCHRIFT

(11) **EP 3 609 848 B1**
(45) Veröffentlichungstag und Bekanntmachung des Hinweises auf die Patenterteilung: **30.12.2020**
(21) Anmeldenummer: 18711333.7
(22) Anmeldetag: 15.03.2018
(51) Int. Cl.: C03B 23/025, C03B 23/03

(54) **SCHWERKRAFTBIEGEFORM ZUM BIEGEN VON GLASSCHEIBEN MIT GEKRÜMMTER AUFLAGEFLÄCHE**
GRAVITY BENDING MOULD FOR BENDING GLASS SHEETS WITH A CURVED SUPPORT SURFACE
MOULE DE CINTRAGE PAR GRAVITÉ POUR VITRES AYANT UNE SURFACE DE CONTACT COURBÉE

(30) Priorität: 10.04.2017 EP 17165666
(43) Veröffentlichungstag der Anmeldung: 19.02.2020
(73) Patentinhaber: SAINT-GOBAIN GLASS FRANCE, 92400 Courbevoie (FR)
(72) Erfinder: SCHILLINGS, Peter, 52249 Eschweiler (DE); BORDERIOU, Arnaud, 60200 Compiegne (FR); PALMANTIER, Arthur, 52064 Aachen (DE); ZEICHNER, Achim, 52134 Herzogenrath (DE)
(74) Vertreter: Feist, Florian Arno
(86) Internationale Anmeldenummer: PCT/EP2018/056470
(87) Internationale Veröffentlichungsnummer: WO 2018/188887

(56) Entgegenhaltungen:
- EP-A1- 0 571 162
- WO-A1-2008/095455
- JP-A- H08 295 522
- JP-A- 2000 327 354
- JP-A- 2004 203 676
- JP-A- 2014 051 417

## Beschreibung

Die Erfindung betrifft eine Schwerkraftbiegeform zum Biegen von Glasscheiben sowie ein damit durchgeführtes Schwerkraftbiegeverfahren.

Verglasungen für Kraftfahrzeuge weisen typischerweise eine Biegung auf. Eine verbreitetes Verfahren zum Biegen von Glasscheiben ist das sogenannte Schwerkraftbiegen (auch *gravity bending* oder *sag bending*). Dabei wird die im Ausgangszustand plane Glasscheibe auf der Auflagefläche einer meist rahmenartigen Biegeform angeordnet. Die Scheibe wird dann auf mindestens ihre Erweichungstemperatur erwärmt, so dass sich die Scheibenmitte unter dem Einfluss der Schwerkraft absenkt, wodurch die Biegung entsteht. Durch das Schwerkraftbiegen kann die endgültige Biegung erreicht werden. Ein solches Verfahren ist beispielsweise aus GB 813069 A bekannt. Bei komplexeren Scheibenformen kommen jedoch häufig mehrstufige Biegeverfahren zum Einsatz. Typischerweise wird in einem ersten Biegeschritt mittels Schwerkraftbiegen eine Vorbiegung erzeugt, während die endgültige Form in einem zweiten Biegeschrift - häufig mittels Pressbiegen zwischen zwei komplementären Biegeformen - erzeugt wird. Solche mehrstufige Biegeverfahren sind beispielsweise aus EP 1 836 136 B1, US 2004107729 A1, EP 0531152 A2 und EP 1371616 A1 bekannt.

Herkömmliche Schwerkraftbiegeformen weisen eine rahmen- oder ringartige Auflagefläche auf, die mit einem umlaufenden Randbereich der Glasscheibe in Kontakt steht. Die Auflagefläche ist dabei plan ausgebildet und nach innen geneigt, um grob an die finale Form der Glasscheibe angeglichen zu sein. Diese Form der Auflagefläche kann allerdings Abdrücke auf der Glasscheibe erzeugen und somit die Qualität der Glasscheiben negativ beeinflussen. Wird die im Ausgangszustand plane Glasscheibe auf die Auflagefläche abgelegt, so steht sie zunächst nur mit der äußeren Kante der Auflagefläche in Kontakt, da diese infolge der Neigung der Auflagefläche am höchsten gelegen ist. Dieser im Wesentlichen linienförmige Kontakt zwischen Biegeform und Glasscheibe kann zu einer hohen Druckbelastung führen, wodurch die Abdrücke entstehen. Ebenso kann es vorkommen, dass die Glasscheibe im final gebogenen Zustand lediglich auf der inneren Kante der Auflagefläche aufliegt, wobei ebenfalls Abdrücke entstehen können.

Es sind auch komplexere Schwerkraftbiegewerkzeuge bekannt, mit denen die Scheibenqualität verbessert und insbesondere starke Scheibenbiegungen erzeugt werden können. So offenbaren WO2008068526A1, US5882370A und US2008134721A1 beispielsweise Schwerkraftbiegeformen mit gelenkig gelagerten Randbereichen. Die Randbereiche werden zunächst unten positioniert, so dass die Schwerkraftbiegeform relativ flach ausgebildet ist, wenn die plane Scheibe darauf abgelegt wird, und werden mit wachsender Scheibenbiegung nach oben geschwenkt, um im Randbereich schonend eine stärkere Biegung zu realisieren. Die Werkzeuge sind allerdings sehr komplex mit Gelenken und Mitteln zum Erzeugen der schwenkenden Bewegung, was die Herstellung, Wartungsintensität und Fehleranfälligkeit erhöht

JP2014051417 A veröffentlicht eine Schwerkraftbiegeform zum Biegen von Glasscheiben, umfassend eine rahmenförmige Auflagefläche.

Der vorliegenden Erfindung liegt die Aufgabe zugrunde, eine verbesserte Schwerkraftbiegeform bereitzustellen, mit der die Glasscheibenqualität verbessert wird, insbesondere Werkzeugabdrücke vermieden werden, ohne dass komplexere Biegeverfahren notwendig werden.

Die Aufgabe wird erfindungsgemäß gelöst durch eine Schwerkraftbiegeform gemäß dem unabhängigen Anspruch 1. Bevorzugte Ausgestaltungen gehen aus den abhängigen Ansprüchen hervor.

Die erfindungsgemäße Schwerkraftbiegeform zum Biegen von Glasscheiben weist eine rahmenförmige Auflagefläche auf, die dazu geeignet ist, eine Glasscheibe darauf anzuordnen. Die Schwerkraftbiegeform ist eine sogenannte untere Form, auf die die Scheibe abgelegt werden kann, so dass die nach oben weisende Auflagefläche die untere, dem Erdboden zugewandte Oberfläche der Glasscheibe berührt. Lediglich ein Randbereich der Glasscheibe steht mit der rahmenförmigen oder rahmenartigen Auflagefläche in direktem Kontakt, während der größte Teil der Glasscheibe keinen direkten Kontakt zur Biegeform hat. Eine solche Biegeform kann auch als Ring (Biegering) oder Rahmen (Rahmenform) bezeichnet werden. Die Auflagefläche muss nicht notwendigerweise einen vollständigen Rahmen bilden, sondern kann auch unterbrochen sein. Die Auflagefläche ist in Form eines vollständigen oder unterbrochenen Rahmens ausgebildet.

Die Schwerkraftbiegeform kann auch als Biegewerkzeug bezeichnet werden. Mit Auflagefläche wird dabei eine im Wesentlichen nach oben weisende, vom Erdboden abgewandte Fläche bezeichnet, die bestimmungsgemäß dafür vorgesehen ist, die Glasscheibe zu tragen. Die Auflagefläche wird durch Kanten begrenzt. Während des Biegeprozesses muss nicht notwendigerweise die gesamte Auflagefläche mit der Glasscheibe in direktem Kontakt stehen. Vielmehr kann es Bereich der Auflagefläche geben, die mit den tatsächlichen Kontaktbereichen eine einheitliche, im Wesentlichen nach oben gewandte Fläche bilden, aber nicht mit der Glasscheibe in direkten Kontakt kommen. Die Auflagefläche weist eine Außenkante und eine Innenkante auf, die jeweils umlaufend rahmenartig verlaufen. Die Innenkante ist dem Zentrum und im bestimmungsgemäßen Einsatz der Glasscheibenmitte zugewandt. Die Außenkante weist nach außen und ist im bestimmungsgemäßen Einsatz der Scheibenkante zugewandt und von der Glasscheibenmitte abgewandt. Die umlaufende Seitenkante der Glasscheibe kann auf der Auflagefläche angeordnet sein oder auch abschnittsweise oder umlaufend über die Auflagefläche überstehen.

Im Unterschied zu herkömmlichen Schwerkraftbiegeformen ist die Auflagefläche nicht komplett plan, sondern teilweise gekrümmt ausgebildet. Die erfindungsgemäße Auflagefläche weist einen äußeren, einen mittleren und einen inneren Bereich auf. Die Bereiche sind ebenfalls rahmenartig ausgebildet, wobei der äußere Bereich den mittleren Bereich umschließt, welcher wiederum den inneren Bereich umschließt. Der äußere Bereich ist der Außenkante zugewandt, der innere Bereich ist der Innenkante zugewandt und der mittlere Bereich ist zwischen dem äußeren Bereich und dem inneren Bereich angeordnet. Die Bereiche sind in einem Querschnitt durch die Schwerkraftbiegeform zwischen der Außenkante und der Innenkante der Auflagefläche zu erkennen, wobei ausgehend von der Außenkante in Richtung der Innenkante zunächst der äußere Bereich, dann der mittlere Bereich und dann der innere Bereich angeordnet ist.

Der äußere Bereich der Auflagefläche ist erfindungsgemäß plan ausgebildet. Der mittlere Bereich kann plan oder leicht gekrümmt ausgebildet sein. Der innere Bereich weist dagegen eine relativ starke Krümmung auf, die der beim Schwerkraftbiegeprozess erzeugten Krümmung der Glasscheibe entgegengesetzt ist. Da die Scheibenmitte unter der Wirkung der Schwerkraft absinkt und die Scheibenränder relativ zur Scheibenmitte angehoben werden, wird beim Schwerkraftbiegen die Glasscheibe derart gebogen, dass die untere Scheibenoberfläche konvex und die obere Scheibenoberfläche konkav gekrümmt ist. Als untere Scheibenoberfläche wird dabei diejenige Hauptfläche der Glasscheibe bezeichnet, die der Biegeform und dem Erdboden zugewandt ist, während als obere Scheibenoberfläche diejenige Hauptfläche der Glasscheibe bezeichnet ist, die von der Biegeform abgewandt ist und nach oben weist. Der innere Bereich der erfindungsgemäßen Auflagefläche ist folglich konvex gekrümmt, so dass die Krümmung des zweiten Bereichs und die Krümmung der Glasscheibe einander entgegengesetzt sind.

Die Höhe der Auflagefläche nimmt im mittleren und inneren Bereich in der Richtung von der Außenkante zur Innenkante ab. Durch die erfindungsgemäße Ausformung der Auflagefläche wird vermieden, dass die Glasscheibe lediglich auf den Kanten der Auflagefläche aufliegt. Stattdessen liegt die Glasscheibe zunächst flächig auf dem äußeren Bereich auf und nach Einsetzen der Biegung flächig auf dem mittleren Bereich. Die Gefahr der Erzeugung von störenden Werkzeugabdrücken kann dadurch wirksam vermieden werden. Solche Abdrücke können die Qualität der Glasscheibe herabsetzen oder sie sogar gänzlich unbrauchbar machen. Wenn die im Ausgangszustand plane Glasscheibe auf die Auflagefläche aufgelegt wird, so steht sie zunächst nur mit dem planen äußeren Bereich in Kontakt, der am höchsten gelegen ist. Der äußere Bereich stellt also einen großflächigen Kontaktbereich für die Glasscheibe vor dem Biegeprozess bereit, im Gegensatz zu herkömmlichen Auflageflächen, bei denen die Glasscheibe anfangs nur auf der Außenkante aufliegt. Nach Einsetzen der Biegung der erhitzten Scheibe verlagert sich der Kontaktbereich zwischen Auflagefläche und Glasscheibe infolge des Absinkens des Zentralbereichs der Glasscheibe auf den mittleren Bereich der Auflagefläche, wo die Glasscheibe nach erfolgter Biegung wiederum flächig aufliegt. Die Innenkante der Auflagefläche kommt nicht in Kontakt zur Glasscheibe, was durch den stark gekrümmten inneren Bereich sichergestellt wird. Durch den fehlenden Kontakt zwischen Innenkante und Glasscheibe können wiederum Werkzeugabdrücke vermieden werden.

Die erfindungsgemäße Auflagefläche erhöht also die Qualität der gebogenen Glasscheiben durch die Vermeidung von Werkzeugabdrücken erst im Ausgangszustand und anschließend im final gebogenen Zustand. Gleichzeitig werden keine aufwendigen Anpassungen der Biegevorrichtungen und -verfahren erforderlich. Es muss lediglich der Auflagerahmen vorhandener Vorrichtungen durch den erfindungsgemäßen ersetzt werden. So ist die Erfindung einfach in bestehende Anlagen und Prozesse integrierbar. Das sind große Vorteile der vorliegenden Erfindung.

Der plane äußere Bereich ist vorteilhafterweise horizontal angeordnet. Er liegt insgesamt in einer horizontalen, planen Ebene, so dass die Glasscheibe auf ihn abgelegt und sicher auf ihm gelagert werden kann.

Der mittlere Bereich ist nach innen, also zur Innenkante hin geneigt, so dass die Höhe der Auflagefläche im mittleren Bereich von außen nach innen abnimmt. Der mittlere Bereich kann plan oder gekrümmt ausgebildet sein, wobei die Krümmung geringer ausgeprägt ist als im inneren Bereich der Auflagefläche. Der mittlere Bereich ist, sofern er gekrümmt ausgebildet ist, bevorzugt konvex gekrümmt, so dass er eine der Krümmung der Glasscheibe entgegengesetzte Krümmung aufweist, ebenso wie der innere Bereich.

Der äußere Bereich, der mittlere Bereich und der innere Bereich der Auflagefläche können in dieser Reihenfolge unmittelbar aneinander grenzen. Das Auftreten von scharfen Kanten, zum Beispiel zwischen einem planen äußeren und einem planen mittleren Bereich, sollte jedoch vermieden werden. Die Übergänge zwischen den Bereichen sollten also fließend und gekrümmt verlaufen. Zwischen den Bereichen können auch Übergangsbereiche angeordnet sein. Die Funktion wird grundsätzlich sogar dann erfüllt, wenn die Bereiche beispielsweise durch Vertiefungen voneinander getrennt sind. Es sollten allerdings keine Bereiche zwischen äußerem und mittlerem beziehungsweise zwischen mittlerem und innerem Bereich existieren, die über den äußeren Bereich hinausragen. Insgesamt sollte der äußere Bereich der höchstgelegene Bereich der Auflagefläche sein.

Der äußere Bereich grenzt bevorzugt unmittelbar an die Außenkante der Auflagefläche an. Der innere Bereich grenzt bevorzugt unmittelbar an die Innenkante der Auflagefläche an. Dann wird die Funktion ideal erfüllt. Es ist jedoch grundsätzlich auch denkbar, dass weitere Bereiche zwischen dem inneren beziehungsweise äußeren Bereich und der jeweiligen Kante angeordnet sind, insbesondere solche, die bestimmungsgemäß nicht mit der Glasscheibe in Kontakt kommen. Diese weiteren Bereiche würden zur erfindungsgemäßen Funktion der Auflagefläche allerdings keinen Beitrag leisten. Beispielsweise könnte die Auflagefläche zwischen dem planen äußeren Bereich und der Außenkante noch einen abfallenden Bereich aufweisen oder zwischen dem gekrümmten inneren Bereich und der Innenkante einen planen abfallenden Bereich.

Der innere Bereich ist stärker gekrümmt als der mittlere Bereich, weist also einen kleineren Krümmungsradius auf. Das Ausmaß der erforderlichen Krümmung des inneren Bereichs der Auflagefläche hängt wesentlich von der Geometrie der zu biegenden Glasscheibe ab und kann mittels fachüblicher Berechnungen bei der Planung des Biegewerkzeugs ermittelt werden. Die Krümmung des inneren Bereichs ist insbesondere derart gewählt, dass die Glasscheibe im final gebogenen Zustand die Innenkante nicht berührt.

In einer bevorzugten Ausgestaltung beträgt der Krümmungsradius im inneren Bereich höchstens 200 mm, besonders bevorzugt von 20 mm bis 100 mm. Der Krümmungsradius im mittleren Bereich beträgt bevorzugt mindestens 200 mm, besonders bevorzugt mindestens 400 mm. Damit werden bei üblichen Scheibenbiegungen besonders gute Ergebnisse erzielt.

Der Krümmungsradius kann im mittleren Bereich und im inneren Bereich jeweils konstant sein, so dass sich der Krümmungsradius am Übergang zwischen den Bereichen mehr oder weniger abrupt ändert. Es kann vorteilhaft sein, wenn der Krümmungsradius des inneren Bereichs und/oder des mittleren Bereichs in der Richtung von der Außenkante zur Innenkante zumindest abschnittsweise abnimmt. Im Querschnitt von der Außenkante zur Innenkante existiert also zumindest ein Abschnitt des jeweiligen Bereichs, in dem die Krümmung von außen nach innen stärker wird. Dadurch wird die Innenkante der Auflagefläche weiter abgesenkt und die Gefahr eines Kontakts zwischen Innenkante und Glaskante weiter vermindert. Der Abschnitt mit abnehmendem Krümmungsradius grenzt bevorzugt direkt an die Innenkante an, so dass an der Innenkante - und nur dort - der minimale Krümmungsradius auftritt.

Die Auflagefläche weist bevorzugt eine Breite von 3 cm bis 20 cm auf, besonders bevorzugt von 5 cm bis 15 cm. Solche Breiten sind für Auflagefläche von Schwerkraftbiegeformen üblich. Mit Breite wird die Ausdehnung der Auflagefläche entlang der kürzesten Verbindung zwischen Außenkante und Innenkante bezeichnet, insbesondere im Wesentlichen senkrecht zu den beiden Kanten.

Beim Schwerkraftbiegen wirkt hauptsächlich der mittlere Bereich auf die Glasscheibe, daher sollte der mittlere Bereich den Großteil der Auflagefläche ausmachen. Die Breite des mittleren Bereichs beträgt bevorzugt mindestens 50% der Breite der Auflagefläche, besonders bevorzugt mindestens 70%, ganz besonders bevorzugt von 80% bis 90%.

Die Breite des planen äußeren Bereichs der Auflagefläche sollte mindestens 5 mm betragen, bevorzugt von 5 mm bis 20 mm. Damit wird eine stabile anfängliche Positionierung auf der Auflagefläche gewährleistet und der Druck wird über eine ausreichend große Fläche verteilt, um Werkzeugabdrücke zu vermeiden. Die Breite des gekrümmten inneren Bereichs der Auflagefläche sollte mindestens 2 mm betragen, bevorzugt von 2 mm bis 10 mm.

Die Auflagefläche der Schwerkraftbiegeform kann mit einem Gewebe, insbesondere metallhaltigem Gewebe überzogen sein. Dies dient einerseits der Polsterung, um die Gefahr von Werkzeugabdrücke weiter zu reduzieren, andererseits der thermischen Isolation, um eine Abkühlung der Glasscheibe durch die Schwerkraftbiegeform zu verringern.

Die Erfindung umfasst außerdem eine Vorrichtung zum Schwerkraftbiegen von Glasscheiben, umfassend eine erfindungsgemäße Schwerkraftbiegeform, Mittel zum Heizen einer Glasscheibe und Mittel zum Anordnen der Glasscheibe auf die Schwerkraftbiegeform. Die Glasscheibe kann beispielweise mittels Rollen einen Tunnelofen durchlaufen, wo sie aufgeheizt wird, und anschließend von einer Transportform aufgenommen und auf die Schwerkraftbiegeform abgelegt werden. Alternativ kann die Glasscheibe auch auf die Schwerkraftbiegeform aufgelegt und zusammen mit dieser durch den Ofen zur Biegestation transportiert werden.

Das Mittel zum Anordnen der Glasscheibe auf der Schwerkraftbiegeform ist insbesondere eine obere Transportform mit nach unten gerichteter Kontaktfläche. Die Glasscheibe wird an die Kontaktfläche angesaugt oder angeblasen. Die Schwerkraftbiegeform wird unter die Transportform bewegt (oder alternativ die Transportform über die Schwerkraftbiegeform), optional an die Transportform angenähert und durch Ausschalten der Saug- oder Blaswirkung wird die Glasscheibe auf die Auflagefläche der Schwerkraftbiegeform abgelegt. Die Kontaktfläche der Transportform ist bevorzugt plan ausgebildet, womit die im Ausgangszustand plane Glasscheibe optimal transportiert werden kann.

Die Vorrichtung ist vorteilhafterweise für einen mehrstufigen Glasbiegeprozess ausgelegt, bei dem die Glasscheibe zunächst auf der erfindungsgemäßen Schwerkraftbiegeform mittels Schwerkraftbiegen vorgebogen wird und anschließend mittels Pressbiegen in die endgültige Form gebracht wird. Dazu weist die Vorrichtung eine obere Pressbiegeform mit nach unten weisender Kontaktfläche und eine untere Pressbiegeform mit nach oben weisender Kontaktfläche auf, zwischen denen die Glasscheibe gepresst wird. Die untere Pressebiegeform weist bevorzugt ebenfalls eine rahmenartige Kontaktfläche auf.

Die Vorrichtung kann eigens Mittel zum Bewegen der Glasscheibe von der Schwerkraftbiegeform auf die untere Pressbiegeform umfassen, beispielsweise eine weitere obere Transportform. In einer vorteilhaften Ausgestaltung sind die Schwerkraftbiegeform und die untere Pressbiegeform in einem gemeinsamen Werkzeug kombiniert, wobei die Kontaktfläche der unteren Pressbiegeform die Auflagefläche der Schwerkraftbiegeform umrahmt oder umgekehrt. Die Kontaktfläche der unteren Pressbiegeform und die Auflagefläche der Schwerkraftbiegeform sind durch Vertikalverschiebung relativ zueinander bewegbar, so dass zwischen einem ersten Zustand, in dem die Auflagefläche der Schwerkraftbiegeform höher angeordnet ist als die Kontaktfläche der unteren Pressbiegeform, und einem zweiten Zustand, in dem die Kontaktfläche der unteren Pressbiegeform höher angeordnet ist als die Auflagefläche der Schwerkraftbiegeform, gewechselt werden kann. Ist die Glasscheibe im ersten Zustand auf der Schwerkraftbiegeform vorgebogen worden, so kann sie durch Übergang in den zweiten Zustand, einfach auf die untere Pressbiegeform übergeben werden.

Beim Pressbiegen liegt die Seitenkante der Glasscheibe entlang einer Kontaktlinie auf der Kontaktfläche der unteren Pressbiegeform auf. Die Kontaktlinie wandert während des Pressens von einer Erstkontaktlinie bis zu einer Presslinie (wird also auf der Kontaktfläche verschoben). In einer besonders vorteilhaften Weiterbildung ist die Kontaktfläche zwischen der Erstkontaktlinie und der Presslinie konvex gekrümmt ausgebildet. Die konvexe Krümmung der Kontaktfläche ist der Krümmungsrichtung der Glasscheibe entgegengesetzt. Die Kontaktfläche ist also gleichsam von der Glasscheibe weg gebogen, wodurch verhindert wird, dass die Scheibenhauptfläche mit der Kontaktfläche in Berührung kommt. Stattdessen bleibt der linienartige Kontakt entlang der Seitenkante der Glasscheibe auch bei starken Scheibenkrümmungen gewährleistet. Mit der erfindungsgemäßen unteren Pressbiegeform lassen sich Glasscheiben mit starker Krümmung insbesondere im Randbereich und hoher optischer Qualität fertigen.

Die untere Pressbiegeform weist eine Kontaktfläche auf, die rahmenartig ausgebildet ist. Während des Biegeprozesses kommt nicht die gesamte Kontaktfläche mit der Glasscheibe in direkten Kontakt, sondern lediglich der Bereich zwischen der Erstauflagelinie und der Presslinie. Die Kontaktfläche ist keine sogenannte Vollform, also keine massive Biegeform, die dafür vorgesehen ist, mit einem Großteil der Glasscheibe in Kontakt zu kommen. Stattdessen die die Kontaktfläche rahmenartig oder -förmig ausgebildet und an die Kontur der zu biegenden Glasscheibe angepasst, so dass sie geeignet ist, die umlaufenden Seitenkante der Glasscheibe zu kontaktieren. Die untere Oberfläche der Glasscheibe hat keinen direkten Kontakt zur Kontaktfläche, sondern lediglich ihre Seitenkante.

Ausschließlich die Seitenkante der Glasscheibe kommt mit der Kontaktfläche der unteren Pressbiegeform in Kontakt. Der direkte Kontakt zwischen Glasscheibe und Kontaktfläche ist also linienartig oder linienförmig ausgebildet, wobei diese Linie im Sinne der Erfindung als Kontaktlinie bezeichnet wird. Diejenige Kontaktlinie, entlang der die Glasscheibe die Kontaktfläche als erstens berührt, wenn die Werkzeuge einander angenähert werden vor dem Einsetzen der Verformung, wird im Sinne der Erfindung als Erstkontaktlinie bezeichnet. Sobald das eigentliche Pressbiegen einsetzt und die Scheibe verformt wird, verschiebt sich die Seitenkante der Glasscheibe auf der Kontaktfläche. Infolge der zunehmenden Krümmung der Glasscheibe wandert die Kontaktlinie nach innen, weg von der äußeren Begrenzungskante der rahmenartigen Kontaktfläche. Haben die Biegeformen mit Abschluss des Pressbiegens nach Erreichen der endgültigen Scheibenform ihre finale Position erreicht, so ist die Kontaktlinie maximal verschoben worden und hat ihre am meisten innenliegende Position erreicht. Diese Kontaktlinie wird im Sinne der Erfindung als Presslinie bezeichnet. Der direkte Kontakt zwischen Glasscheibe und unterer Biegeform ist während des gesamten Biegeverfahrens immer nur linienartig entlang der Kontaktlinie. Die untere Scheibenoberfläche kommt nie mit der unteren Biegeform in Kontakt.

Die Kontaktfläche der unteren Pressbiegeform weist mindestens einen Abschnitt auf, in dem sie zumindest im Bereich zwischen der Erstkontaktlinie und der Presslinie konvex gekrümmt ausgebildet ist. Die Glasscheibe wird von der oberen Pressbiegeform derart in die untere Pressbiegeform hineingedrückt, dass die Scheibenmitte absinkt und die Scheibenränder relativ zur Scheibenmitte angehoben werden. Die Glasscheibe wird also derart gebogen, dass die untere Scheibenoberfläche konvex und die obere Scheibenoberfläche konkav gekrümmt wird. Die Kontaktfläche ist konvex gekrümmt, so dass die Krümmung der Kontaktfläche und die Krümmung der Glasscheibe einander entgegengesetzt sind. Die Höhe der Kontaktfläche nimmt in der Richtung von der Außenkante zur Innenkante ab. Der innere Bereich der Kontaktfläche ist also gleichsam von der Glasscheibe weggebogen, so dass auch bei starken Scheibenbiegungen vermieden wird, dass die Kontaktfläche die untere Scheibenoberfläche berührt.

Die Krümmung ist derart gewählt, dass die untere Scheibenoberfläche die Kontaktfläche auch im final gebogenen Zustand nicht berührt. Von der unteren Scheibenoberfläche und der Kontaktfläche sollte also stets ein Winkel größer 0° eingeschlossen werden, der im Sinne der Erfindung als Freiwinkel bezeichnet wird. Aufgrund der Scheibenkrümmung ist zur exakten Bestimmung des Freiwinkels die jeweilige Tangentialebene an der Kontaktierungslinie heranzuziehen. Der Freiwinkel zwischen Glasscheibe und Kontaktfläche an der Presslinie beträgt bevorzugt mindestens 3°, besonders bevorzugt mindestens 5°, beispielsweise von 5° bis 8°. Damit sind Scheibenoberfläche und Kontaktfläche ausreichend beabstandet, um auch unter Berücksichtigung von Fertigungstoleranzen einen direkten Kontakt wirksam auszuschließen. Der Krümmungsradius der Kontaktfläche zwischen Erstkontaktlinie und Presslinie sollte vorteilhafterweise höchstens 750 mm betragen, bevorzugt höchstens 500 mm. Damit werden bei üblichen Krümmungsradien der zu biegenden Glasscheibe besonders gute Ergebnisse erzielt und ein hinreichender Freiwinkel sichergestellt.

Die obere Pressbiegeform ist in einer vorteilhaften Ausgestaltung als sogenannte Vollform ausgebildet, weist also eine vollflächige nach unten weisende Kontakt- oder Wirkfläche auf. Im Gegensatz zu einer Rahmenbiegeform steht eine solche Wirkfläche, die auch als massiv bezeichnet werden kann, am Ende des Biegeschrittes mit einem Großteil der oberen Scheibenoberfläche - oder sogar der gesamten oberen Scheibenoberfläche - in Kontakt. Eine massive obere Pressbiegeform ist in Verbindung mit einer rahmenartigen unteren Pressbiegeform besonders zum Pressbiegen geeignet. Die Wirkfläche der oberen Pressbiegeform ist insbesondere konvex ausgeformt und weist eine Geometrie auf, die derjenigen der final gebogenen Scheibe entspricht.

Die Erfindung umfasst auch eine Anordnung zum Biegen von Glasscheiben, umfassend die erfindungsgemäße Schwerkraftbiegeform beziehungsweise die erfindungsgemäße Vorrichtung und eine auf der Auflagefläche der Schwerkraftbiegeform angeordnete Glasscheibe.

Die Erfindung umfasst außerdem ein Verfahren zum Biegen von Glasscheiben, mindestens umfassend die folgenden Verfahrensschritte:
(a) Erwärmen einer Glasscheibe auf mindestens ihre Erweichungstemperatur und Anordnen der Glasscheibe auf der Auflagefläche einer erfindungsgemäßen Schwerkraftbiegeform, genauer gesagt auf dem planen äußeren Bereich der Auflagefläche;
(b) Schwerkraftbiegen der Glasscheibe;
(c) Abkühlen der Glasscheibe.

Das Erwärmen der Glasscheibe kann vor oder nach dem Anordnen auf der Schwerkraftbiegeform erfolgen. Beim Schwerkraftbiegen wandert der Kontaktbereich zwischen Glasscheibe und Auflagefläche vom äußeren Bereich der Auflagefläche in den planen oder leicht gekrümmten mittleren Bereich, wo sie flächig aufliegt. Der Kontaktbereich wandert jedoch nicht bis zur Innenkante der Auflagefläche, welche von der Glasscheibe nicht berührt wird.

Die zu biegende Glasscheibe enthält bevorzugt Kalk-Natron-Glas, wie es für Fensterscheiben üblich ist, kann aber auch andere Glassorten enthalten, wie Borsilikatglas oder Quarzglas. Die Dicke der Glasscheibe beträgt typischerweise von 0,5 mm bis 10 mm, bevorzugt 1 mm bis 5 mm.

Typische Temperaturen zum Biegen von Glasscheiben betragen von 500 °C bis 700 °C, insbesondere etwa 650 °C beim Biegen von Scheiben aus Kalk-Natron-Glas.

Das Abkühlen der Glasscheibe kann auf der erfindungsgemäßen Schwerkraftbiegeform erfolgen oder auch auf einer weiteren Form, auf die die Scheibe übergeben wird. Das Abkühlen kann bei Umgebungstemperatur oder durch aktive Kühlung erfolgen. Die erfindungsgemäße Schwerkraftbiegeform eignet sich besonders zur Herstellung von gebogenen, vorgespannten Glasscheiben, wie sie beispielsweise als Seitenscheiben oder Heckscheiben von Kraftfahrzeugen üblich sind. Daher wird die Glasscheibe in einer bevorzugten Ausführung nach dem Biegen durch rasche Abkühlung thermisch vorgespannt. Die Glasscheibe wird dazu nach dem Biegen auf einen sogenannten Vorspannrahmen übergeben, auf dem sie während des Vorspannprozesses gelagert wird.

Das Verfahren ist bevorzugt ein mehrstufiges Biegeverfahren, bei dem die Glasscheibe mittels des Schwerkraftbiegens vorgebogen und anschließen mittels Pressbiegen in die endgültige Form gebracht wird. Dazu wird die Glasscheibe nach dem Schwerkraftbiegen von der Schwerkraftbiegeform auf eine untere Pressbiegeform übergeben. Das Pressbiegen erfolgt zwischen der unteren und einer komplementären oberen Pressbiegeform. Hinsichtlich bevorzugter Ausführungen gelten die vorstehenden Ausführungen im Zusammenhang mit der Vorrichtung zum Biegen von Glasscheiben.

Die Erfindung umfasst außerdem die Verwendung einer erfindungsgemäßen Schwerkraftbiegeform zum Schwerkraftbiegen von Glasscheiben für Fortbewegungsmitteln für den Verkehr auf dem Lande, in der Luft oder zu Wasser, bevorzugt zum Schwerkraftbiegen von Fensterscheiben von Schienenfahrzeugen oder Kraftfahrzeugen, insbesondere zum Schwerkraftbiegen von Heckscheiben, Seitenscheiben oder Dachscheiben von Personenkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine gattungsgemäße Schwerkraftbiegeform,
- Fig. 2: einen Querschnitt durch eine gattungsgemäße Schwerkraftbiegeform während des Schwerkraftbiegens einer Glasscheibe,
- Fig. 3: einen Querschnitt durch einen Abschnitt einer erfindungsgemäßen Schwerkraftbiegeform,
- Fig. 4: einen Querschnitt durch den Abschnitt nach Figur 3 während des Schwerkraftbiegens einer Glasscheibe,
- Fig. 5: zum Vergleich einen Querschnitt durch einen Abschnitt einer herkömmlichen Schwerkraftbiegeform während des Schwerkraftbiegens einer Glasscheibe und
- Fig. 6: ein Flussdiagramm einer Ausführungsform des erfindungsgemäßen Verfahrens.

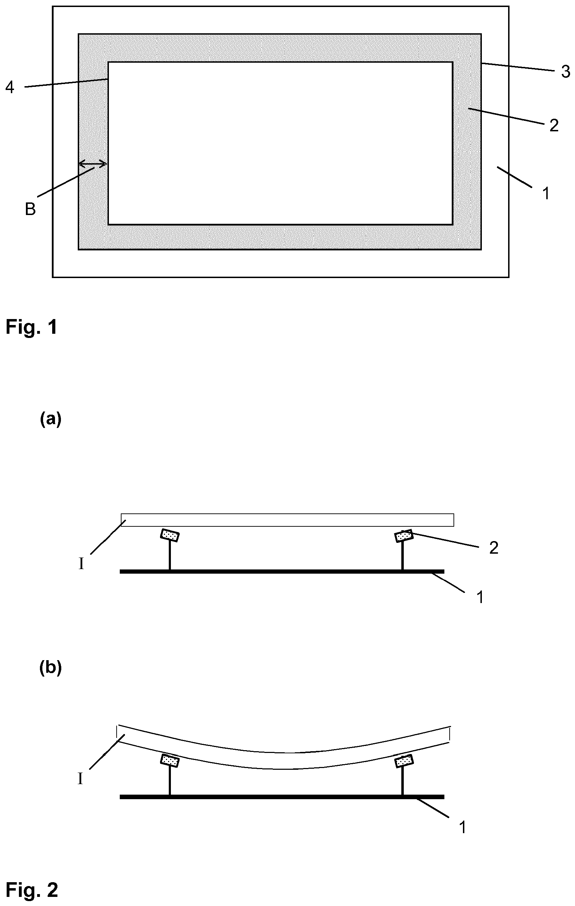

Figur 1 zeigt eine Draufsicht auf eine gattungsgemäße Schwerkraftbiegeform 1. Die rahmenartige Kontaktfläche 2 wird begrenzt durch eine umlaufende Außenkante 3 und eine umlaufende Innenkante 4. Die Breite B der Auflagefläche 2 beträgt beispielsweise etwa 10 cm. Die Auflagefläche 2 steht mit einem umlaufenden Randbereich einer zu biegenden Glasscheibe während des Biegeprozess in Kontakt.

Figur 2 zeigt eine gattungsgemäße Schwerkraftbiegeform 1 im bestimmungsgemäßen Einsatz. Eine im Ausgangszustand plane Glasscheibe I wird auf die Auflagefläche 2 abgelegt (Fig. 2a). Die Glasscheibe 1 wird dann erwärmt, so dass sie erweicht und verformbar wird. Die Scheibenmitte, die nicht durch die Schwerkraftbiegeform 1 gestützt wird, sackt unter dem Einfluss der Schwerkraft ab, wodurch die Scheibenbiegung erreicht wird (Fig. 2b).

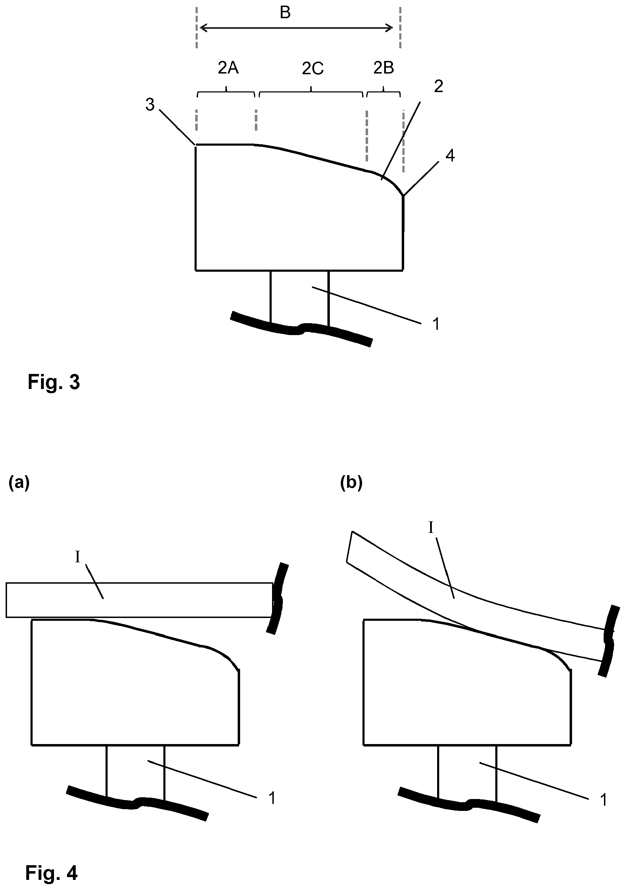

Figur 3 zeigt eine Detailansicht eines Abschnitts einer erfindungsgemäßen Schwerkraftbiegeform 1. Die Auflagefläche 2 ist nicht wie bislang üblich komplett plan und geneigt ausgebildet. Sie besteht aus drei Bereichen: einem äußeren Bereich 2A, einem mittleren Bereich 2C und einem inneren Bereich 2B. Der äußere Bereich 2A ist plan und horizontal ausgebildet und grenzt an die Außenkante 3 an. Der mittlere Bereich 2C ist plan und nach innen geneigt ausgebildet, kann aber auch leicht gekrümmt, insbesondere konvex gekrümmt sein. Der innere Bereich 2B grenzt an die Innenkante 4 an und ist konvex gekrümmt ausgebildet. Durch die Neigung des mittleren Bereichs 2C und die Krümmung des inneren Bereichs 2B nimmt die Höhe der Auflagefläche 2 ausgehend vom äußeren Bereich 2A bis zur Innenkante 4 ab.

Die Breite B der Auflagefläche 2 beträgt beispielsweise 100 mm, die Breite des äußeren Bereichs 2A beispielsweise 15 mm, die Breite des mittleren Bereichs 2C beispielsweise 80 mm und die Breite des inneren Bereichs 2B beispielsweise 5 cm. Etwa 80 % der Breite B der Auflagefläche 2 entfallen also auf den mittleren Bereich 2C, der beim Schwerkraftbiegen auf die Glasscheibe I wirkt. Auf den äußeren Bereich 2A, auf dem die Glasscheibe 1 anfangs aufliegt, entfallen etwa 15% der Breite B. Der inneren Bereich 2B ist an der eigentlichen Biegung nicht beteiligt und stellt nur sicher, dass die Innenkante 4 nicht in Kontakt zur Glasscheibe 1 kommt - auf ihn entfallen lediglich 5% der Breite B.

Figur 4 zeigt den besagten Abschnitt der erfindungsgemäßen Schwerkraftbiegeform 1 während des Schwerkraftbiegens. Die im Ausgangszustand plane Glasscheibe 1 wird auf den planen, horizontalen äußeren Bereich 2A der Auflagefläche 2 aufgelegt (Fig. 4a). Da sich die Anpresskraft über eine relativ große Fläche verteilt, wird nur ein vergleichsweise geringer Druck von der Schwerkraftbiegeform 1 auf die Glasscheibe I ausgeübt, so dass die Gefahr von Werkzeugabdrücken verringert wird. Beginnt sich die Glasscheibe 1 nach dem Erweichen unter dem Einfluss der Schwerkraft zu Biegen, so wandert der Kontaktbereich zwischen Glasscheibe I und Auflagefläche 2 in Richtung Innenkante 4 auf den mittleren Bereich 2C. Aufgrund der gegenläufigen Krümmung von Glasscheibe I und innerem Bereich 2C kommt die Glasscheibe I nicht in Berührung mit der Innenkante 4, was wiederum Werkzeugabdrücke erzeugen könnte. Insgesamt wird die optische Qualität der Glasscheibe I durch die erfindungsgemäße Auflagefläche 2 gesteigert.

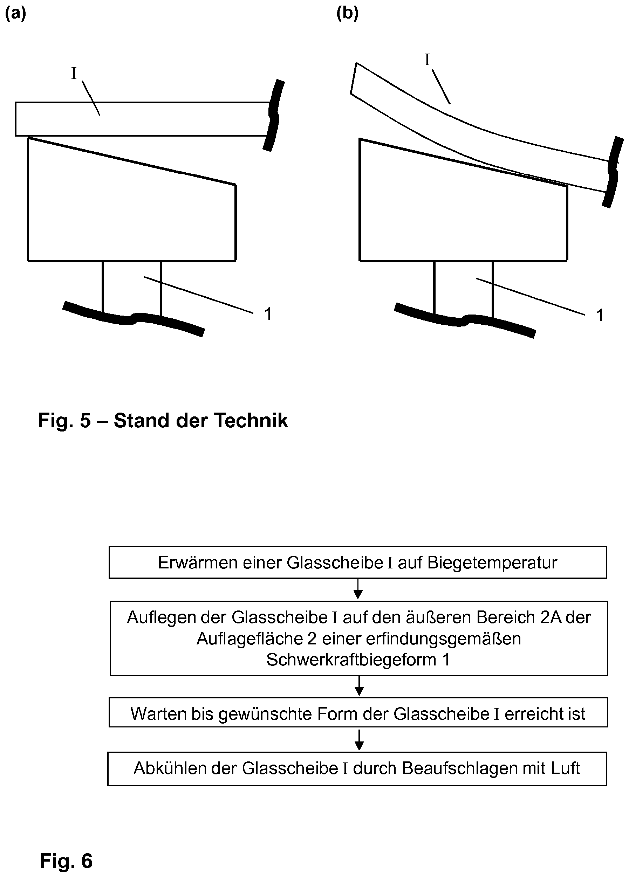

Figur 5 zeigt zum Vergleich einen entsprechenden Abschnitt einer herkömmlichen Schwerkraftbiegeform 1. Die Auflagefläche ist plan und nach innen geneigt ausgebildet. Die plane Glasscheibe I wird zunächst auf die Außenkante abgelegt. Die gebogene Glasscheibe I liegt auf der Innenkante auf. Sowohl vor als auch nach dem Biegen liegt die Glasscheibe also auf einer Kante der Auflagefläche auf, wodurch die Anpresskraft stark konzentriert wird, folglich hoher Druck ausgeübt wird. So können unerwünschte Werkzeugabdrücke entstehen, die die optische Qualität der Glasscheibe I herabsetzt.

Figur 6 zeigt ein Ausführungsbeispiel des erfindungsgemäßen Verfahrens anhand eines Flussdiagramms.

### Bezugszeichenliste:

- (1): Schwerkraftbiegeform
- (2): Auflagefläche der Schwerkraftbiegeform 1
- (2A): äußerer Bereich der Auflagefläche 2
- (2B): innerer Bereich der Auflagefläche 2
- (3): äußerer Kante der Auflagefläche 2
- (4): innerer Kante der Auflagefläche 2

- (B): Breite der Auflagefläche 2

- (I): Glasscheibe

## Patentansprüche

1. Schwerkraftbiegeform (1) zum Biegen von Glasscheiben, umfassend eine rahmenförmige Auflagefläche (2), die dazu geeignet ist, eine Glasscheibe (I) darauf anzuordnen, und die eine Außenkante (3) und eine Innenkante (4) aufweist,
wobei die Auflagefläche (2) einen der Außenkante (3) zugewandten äußeren Bereich (2A), einen der Innenkante (4) zugewandten inneren Bereich (2B) und einen mittleren Bereich (2C) zwischen dem äußeren Bereich (2A) und dem inneren Bereich (2B) aufweist,
und wobei der äußere Bereich (2A) plan und horizontal ausgebildet ist, der mittlere Bereich (2C) zur Innenkante (4) hin geneigt und plan oder gekrümmt ausgebildet ist und der innere Bereich (2B) eine der Krümmung der Glasscheibe (I) entgegengesetzte Krümmung aufweist,
und wobei der innere Bereich (2B) stärker gekrümmt ist als der mittlere Bereich (2C).

2. Schwerkraftbiegeform (1) nach Anspruch 1, wobei der äußere Bereich (2A) an die Außenkante (3) grenzt und der innere Bereich (2B) an die Innenkante (4) grenzt.

3. Schwerkraftbiegeform (1) nach Anspruch 1 oder 2, wobei die Krümmung des inneren Bereichs (2B) derart gewählt ist, dass die Glasscheibe (I) die Innenkante (4) nicht berührt.

4. Schwerkraftbiegeform (1) nach einem der Ansprüche 1 bis 3, wobei der Krümmungsradius im inneren Bereich (2B) höchstens 200 mm beträgt, bevorzugt von 20 mm bis 100 mm.

5. Schwerkraftbiegeform (1) nach einem der Ansprüche 1 bis 4, wobei der Krümmungsradius im mittleren Bereich (2C) mindestens 200 mm beträgt, bevorzugt mindestens 400 mm.

6. Schwerkraftbiegeform (1) nach einem der Ansprüche 1 bis 5, wobei der Krümmungsradius des inneren Bereichs (2B) und/oder des mittleren Bereichs (2C) in der Richtung von der Außenkante (3) zur Innenkante (4) zumindest abschnittsweise abnimmt.

7. Schwerkraftbiegeform (1) nach einem der Ansprüche 1 bis 6, wobei die Breite des mittleren Bereichs (2C) mindestens 50% der Breite (B) der Auflagefläche (2) entspricht, bevorzugt mindestens 70%.

8. Schwerkraftbiegeform (1) nach einem der Ansprüche 1 bis 7, wobei die Breite des äußeren Bereichs (2A) von mindestens 5 mm beträgt, bevorzugt von 5 mm bis 20 mm.

9. Schwerkraftbiegeform (1) nach einem der Ansprüche 1 bis 8, wobei die Breite des inneren Bereichs (2B) mindestens 2 mm beträgt, bevorzugt von 2 mm bis 10 mm.

10. Schwerkraftbiegeform (1) nach einem der Ansprüche 1 bis 9, wobei die Breite (B) der Auflagefläche (2) von 3 cm bis 20 cm beträgt, bevorzugt von 5 cm bis 15 cm.

11. Vorrichtung zum Biegen von Glasscheiben, umfassend eine Schwerkraftbiegeform (1) nach einem der Ansprüche 1 bis 10, Mittel zum Heizen einer Glasscheibe (I) und Mittel zum Anordnen der Glasscheibe auf die Schwerkraftbiegeform (I).

12. Vorrichtung nach Anspruch 11, die außerdem eine obere Pressbiegeform und eine untere Pressbiegeform mit rahmenartigen Kontaktflächen umfasst, wobei die untere Pressbiegeform und die Schwerkraftbiegeform (1) in einem gemeinsamen Werkzeug kombiniert und durch Vertikalverschiebung relativ zueinander bewegbar sind, so dass die Glasscheibe (I) von der Schwerkraftbiegeform (1) auf die untere Pressbiegeform übergeben werden kann,
und wobei die untere Pressbiegeform und die obere Pressbiegeform dazu geeignet sind, die zwischen ihnen befindliche Glasscheibe (I) durch Pressen zu verformen, wobei die Seitenkante der Glasscheibe (I) entlang einer Kontaktlinie auf der Kontaktfläche aufliegt, welche während des Pressens von einer Erstkontaktlinie bis zu einer Presslinie wandert, wobei die Kontaktfläche zwischen der Erstkontaktlinie und der Presslinie konvex gekrümmt ausgebildet ist.

13. Verfahren zum Biegen von Glasscheiben, mindestens umfassend die folgenden Verfahrensschritte:
(a) Erwärmen einer Glasscheibe (I) auf mindestens ihre Erweichungstemperatur und Anordnen der Glasscheibe (I) auf der Auflagefläche (2) einer Schwerkraftbiegeform (1) nach einem der Ansprüche 1 bis 10,
(b) Schwerkraftbiegen der Glasscheibe (I),
(c) Abkühlen der Glasscheibe (I).

14. Verfahren nach Anspruch 13, wobei die Glasscheibe (I) die Innenkante (4) der Auflagefläche (2) nicht berührt.

15. Verwendung einer Schwerkraftbiegeform nach einem der Ansprüche 1 bis 10 zum Biegen von Glasscheiben für Fortbewegungsmitteln für den Verkehr auf dem Lande, in der Luft oder zu Wasser, bevorzugt zum Biegen von Fensterscheiben von Schienenfahrzeugen oder Kraftfahrzeugen, insbesondere zum Biegen von Heckscheiben, Seitenscheiben oder Dachscheiben von Personenkraftwagen.

## Claims

1. Gravity bending mould (1) for bending glass panes, comprising a frame-like support surface (2) that is suitable for arranging a glass pane (I) thereon and that has an outer edge (3) and an inner edge (4)
wherein the support surface (2) has an outer region (2A) facing the outer edge (3), an inner region (2B) facing the inner edge (4), and a central region (2C) between the outer region (2A) and the inner region (2B),
and wherein the outer region (2A) is planar and horizontal, the central region (2C) is inclined toward the inner edge (4) and is planar or curved, and the inner region (2B) has a curvature in the opposite direction to the curvature of the glass pane (I),
and wherein the inner region (2B) is more strongly curved than the central region (2C).

2. Gravity bending mould (1) according to claim 1, wherein the outer region (2A) adjoins the outer edge (3) and the inner region (2B) adjoins the inner edge (4).

3. Gravity bending mould (1) according to claim 1 or 2, wherein the curvature of the inner region (2B) is selected such that the glass pane (I) does not touch the inner edge (4).

4. Gravity bending mould (1) according to one of claims 1 through 3, wherein the radius of curvature in the inner region (2B) is at most 200 mm, preferably from 20 mm to 100 mm.

5. Gravity bending mould (1) according to one of claims 1 through 4, wherein the radius of curvature in the central region (2C) is at least 200 mm, preferably at least 400 mm.

6. Gravity bending mould (1) according to one of claims 1 through 5, wherein the radius of curvature of the inner region (2B) and/or of the central region (2C) decreases, at least in sections, in the direction from the outer edge (3) to the inner edge (4).

7. Gravity bending mould (1) according to one of claims 1 through 6, wherein the width of the central region (2C) is at least 50% of the width (B) of the support surface (2), preferably at least 70%.

8. Gravity bending mould (1) according to one of claims 1 through 7, wherein the width of the outer region (2A) is at least 5 mm, preferably from 5 mm to 20 mm.

9. Gravity bending mould (1) according to one of claims 1 through 8, wherein the width of the inner region (2B) is at least 2 mm, preferably from 2 mm to 10 mm.

10. Gravity bending mould (1) according to one of claims 1 through 9, wherein the width (B) of the support surface (2) is from 3 cm to 20 cm, preferably from 5 cm to 15 cm.

11. Device for bending glass panes, comprising a gravity bending mould (1) according to one of claims 1 through 10, means for heating a glass pane (I), and means for arranging the glass pane on the gravity bending mould (I).

12. Device according to claim 11, which further comprises an upper press-bending mould and a lower press-bending mould with frame-like contact surfaces, wherein the lower press-bending mould and the gravity bending mould (1) are combined in a common tool and are movable relative to one another by vertical displacement such that the glass pane (I) can be transferred from the gravity bending mould (1) onto the lower press-bending mould,
and wherein the lower press-bending mould and the upper press-bending mould are suitable for reshaping the glass pane (I) situated therebetween by pressing, wherein the side edge of the glass pane (I) rests on the contact surface along a contact line, which contact surface migrates during the pressing operation from the first contact line all the way to a pressing line, wherein the contact surface between the first contact line and the pressing line is convexly curved.

13. Method for bending glass panes, at least comprising the following steps:
(a) Heating a glass pane (I) to at least its softening temperature and arranging the glass pane (I) on the support surface (2) of a gravity bending mould (1) according to one of claims 1 through 10,
(b) Gravity bending the glass pane (I),
(c) Cooling the glass pane (I).

14. Method according to claim 13, wherein the glass pane (I) does not touch the inner edge (4) of the support surface (2).

15. Use of a gravity bending mould according to one of claims 1 through 10 for bending glass panes for means of transportation for travel on land, in the air, or on water, preferably for bending window panes of rail vehicles or motor vehicles, in particular for bending rear windows, side windows, or roof panels of passenger cars.

## Revendications

1. Moule de cintrage par gravité (1) pour le cintrage de plaques de verre, comportant une surface de support (2) en forme de cadre, qui est appropriée pour disposer sur celle-ci une plaque de verre (I), et qui présente un bord externe (3) et un bord interne (4),
dans lequel la surface de support (2) présente une région externe (2A) tournée vers le bord externe (3), une région interne (2B) tournée vers le bord interne (4) et une région centrale (2C) entre la région externe (2A) et la région interne (2B),
et dans lequel la région externe (2A) est réalisée plane et horizontale, la région centrale (2C) est inclinée vers le bord interne (4) et réalisée plane ou cintrée et la région interne (2B) présente une courbure opposée à la courbure de la plaque de verre (I),
et dans lequel la région interne (2B) est plus fortement cintrée que la région centrale (2C).

2. Moule de cintrage par gravité (1) selon la revendication 1, dans lequel la région externe (2A) est adjacente au bord externe (3) et la région interne (2B) est adjacente au bord interne (4).

3. Moule de cintrage par gravité (1) selon l'une des revendications 1 ou 2, dans lequel la courbure de la région interne (2B) est choisie de telle sorte que la plaque de verre (I) ne touche pas le bord interne (4).

4. Moule de cintrage par gravité (1) selon l'une des revendications 1 à 3, dans lequel le rayon de courbure dans la région interne (2B) est d'au plus de 200 mm, de préférence de 20 mm à 100 mm.

5. Moule de cintrage par gravité (1) selon l'une des revendications 1 à 4, dans lequel le rayon de courbure dans la région centrale (2C) est d'au moins de 200 mm, de préférence d'au moins de 400 mm.

6. Moule de cintrage par gravité (1) selon l'une des revendications 1 à 5, dans lequel le rayon de courbure de la région interne (2B) et/ou de la région centrale (2C) diminue au moins par sections dans la direction du bord externe (3) au bord interne (4).

7. Moule de cintrage par gravité (1) selon l'une des revendications 1 à 6, dans lequel la largeur de la région centrale (2C) correspond à au moins 50 % de la largeur (B) de la surface de support (2), de préférence à au moins 70 %.

8. Moule de cintrage par gravité (1) selon l'une des revendications 1 à 7, dans lequel la largeur de la région externe (2A) est d'au moins 5 mm, de préférence de 5 mm à 20 mm.

9. Moule de cintrage par gravité (1) selon l'une des revendications 1 à 8, dans lequel la largeur de la région interne (2B) est d'au moins 2 mm, de préférence de 2 mm à 10 mm.

10. Moule de cintrage par gravité (1) selon l'une des revendications 1 à 9, dans lequel la largeur (B) de la surface de support (2) est de 3 cm à 20 cm, de préférence de 5 cm à 15 cm.

11. Dispositif pour le cintrage de plaques de verre, comportant un moule de cintrage par gravité (1) selon l'une des revendications 1 à 10, des moyens pour le chauffage d'une plaque de verre (I) et des moyens pour la disposition de la plaque de verre sur le moule de cintrage par gravité (1).

12. Dispositif selon la revendication 11, qui comporte en outre un moule de cintrage par compression supérieur et un moule de cintrage par compression inférieur avec des surfaces de contact en forme de cadre, dans lequel le moule de cintrage par compression inférieur et le moule de cintrage par gravité (1) sont combinés en un outil commun et déplaçables l'un par rapport à l'autre par déplacement vertical de telle sorte que la plaque de verre (I) peut être transférée du moule de cintrage par gravité (1) sur le moule de cintrage par compression inférieur,
et dans lequel le moule de cintrage par compression inférieur et le moule de cintrage par compression supérieur sont adaptés pour déformer par pression la plaque de verre (I) se trouvant entre ceux-ci, dans lequel le bord latéral de la plaque de verre (I) repose sur la surface de contact le long d'une ligne de contact, laquelle surface de contact migre durant le pressage de la ligne de premier contact jusqu'à une ligne de pressage, dans lequel la surface de contact entre la ligne de premier contact et la ligne de pressage est réalisée cintrée de façon convexe.

13. Procédé pour le cintrage de plaques de verre, comportant au moins les étapes de procédé suivantes :
(a) réchauffer une plaque de verre (I) à au moins sa température de ramollissement et disposer la plaque de verre (I) sur la surface de support (2) d'un moule de cintrage par gravité (1) selon l'une des revendications 1 à 10 ;
(b) cintrer par gravité la plaque de verre (I) ;
(c) refroidir la plaque de verre (I).

14. Procédé selon la revendication 13, dans lequel la plaque de verre (I) ne touche pas le bord interne (4) de la surface de support (2).

15. Utilisation d'un moule de cintrage par gravité selon l'une des revendications 1 à 10 pour le cintrage de plaques de verre pour des moyens de locomotion pour le transport sur terre, dans les airs et sur l'eau, de préférence pour le cintrage de glaces de fenêtre de véhicules ferroviaires ou de véhicules automobiles, en particulier pour le cintrage de vitres arrière, de vitres latérales ou de vitres de toit de voitures particulières.
